# EUROPÄISCHE PATENTSCHRIFT

(11) **EP 3 161 363 B1**
(45) Veröffentlichungstag und Bekanntmachung des Hinweises auf die Patenterteilung: **04.09.2019**
(21) Anmeldenummer: 15722516.0
(22) Anmeldetag: 08.05.2015
(51) Int. Cl.: F16L 13/14, F16L 33/025, F16L 33/207

(54) **ROHRKLEMMANORDNUNG**
TUBE CLAMP ASSEMBLY
DISPOSITIF DE SERRAGE DE TUYAU

(30) Priorität: 25.06.2014 EP 14173871
(43) Veröffentlichungstag der Anmeldung: 03.05.2017
(73) Patentinhaber: Geberit International AG, 8645 Jona (CH)
(72) Erfinder: HEUSSER, Urs, CH-8722 Kaltbrunn (CH); GRAF, Pascal, CH-8132 Egg bei Zürich (CH); LIPPUNER, Marc, CH-8645 Jona (CH)
(74) Vertreter: Frischknecht, Harry Ralph
(86) Internationale Anmeldenummer: PCT/EP2015/060172
(87) Internationale Veröffentlichungsnummer: WO 2015/197246

(56) Entgegenhaltungen:
- EP-A1- 1 126 206
- EP-A1- 2 497 989
- US-B1- 6 439 617

## Beschreibung

### TECHNISCHES GEBIET

Die vorliegende Erfindung betrifft eine Rohrklemmanordnung nach dem Oberbegriff von Anspruch 1.

### STAND DER TECHNIK

Aus dem Stand der Technik sind Rohrklemmanordnungen mit Klemmringen bekannt.

Typischerweise umfassen Klemmringe ein Ohr, das mit einer Zange zusammenpressbar ist um den Klemmring auf einem zu verbindenden Rohrende festzuziehen. Beim Zusammenpressen des Ohrs schliesst sich ein Spalt des Klemmringes, wobei das zu verbindende Rohrende im Bereich dieses Spaltes nicht beaufschlagt wird. Die Pressung des Rohrendes ist deshalb ungleichmässig, was die Dichtigkeit der Verbindung beeinträchtigt.

Aus der EP 2 497 989 ist eine Rohrklemme bekannt geworden, bei welcher ein Spannring vorhanden ist. Der Spannring umfasst mindestens ein Schlitz, welcher im verpressten Zustand ganz oder teilweise aufgehoben wird. Der Spannring ist über einen Halterungsabschnitt gelagert, wobei beim Verpressen der Spannring vom Halterungsabschnitt getrennt wird.

Obwohl bezüglich der Dichtigkeit mit der Rohrklemme nach der EP 2 497 989 sehr gute Resultate erzielt worden sind, ergeht aus der EP 2 497 989 der Nachteil, dass mit dem Angreifen eines Verpresswerkzeuges an das Klemmohr, die Klemme um deren Mittelachse verschwenkt wird. Hierdurch kann es sein, dass des Verpresswerkzeug nicht optimal positioniert ist und es zu einer Fehlverpressung kommt.

### DARSTELLUNG DER ERFINDUNG

Ausgehend von diesem Stand der Technik liegt der Erfindung eine Aufgabe zugrunde, eine Rohrklemme anzugeben, welche die Nachteile des Standes der Technik überwindet. Insbesondere soll die Verpresssicherheit erhöht werden.

Diese Aufgabe löst der Gegenstand von Anspruch 1. Demgemäss umfasst eine Rohrklemme zum Verbinden eines Rohres ein in ein Ende des Rohres einsteckbares Anschlussstück mit einer Mittelachse, einen Klemmring, der entlang seines Umfanges einen ringförmigen Abschnitt und ein sich radial nach aussen erstreckendes Ohr aufweist, das von einem Werkzeug zusammenpressbar ist, und eine durch den Klemmring zusammenpressbare Spannhülse. Die Spannhülse umfasst einen Lagerungsabschnitt und einen sich dem Lagerungsabschnitt anschliessenden Spannabschnitt. Der Lagerungsabschnitt steht mit dem Anschlussstück in Kontakt und der Spannabschnitt ragt mindestens teilweise in den ringförmigen Abschnitt des Klemmrings ein und umgibt das Rohr im Wesentlichen vollständig. Vorzugsweise verfügt der Spannabschnitt über mindestens einen Schlitz, dessen lichte Weite im zusammengepressten Zustand des Klemmrings annähernd oder ganz aufhebbar ist. Weiter umfasst die Rohrklemme mindestens ein Positionierungselement, welches derart angeordnet ist, dass vor dem Zusammenpressen des Ohrs die Rotationsposition um die Mittelachse zwischen dem Anschlussstück und der Spannhülse und/oder dem Klemmring ausrichtbar und dass mit dem Positionierungselement eine Drehhemmung zwischen Anschlussstück und der Spannhülse und/oder dem Klemmring bereitstellbar ist.

Durch die Anordnung der Positionierungselementes kann ein Widerstand gegen die Relativbewegung zwischen Anschlussstück und Spannhülse bzw. Klemmring bereitgestellt werden. Der Widerstand wird durch die Drehhemmung bereitgestellt. Der Widerstand bzw. die Drehhemmung kann bei Aufbringen einer Ausrichtungskraft überwunden werden, so dass Spannhülse und Klemmring um die Mittelachse verschwenkbar sind, wodurch die Rotationsposition an die lokalen Gegebenheiten anpassbar ist. Folglich kann der Installateur Spannhülse und Klemmring so ausrichten, dass er mit dem Klemmwerkzeug guten Zugang hat. Dadurch, dass das Positionierungselement die besagte Drehhemmung bereitstellt, wird verhindert, dass bei einer Kontaktierung des Klemmrings mit dem Klemmwerkzeug die Spannhülse und der Klemmring bewegt werden. Folglich können hierdurch Fehlverpressungen vermieden werden.

Mit anderen Worten: Das Positionierungselement hat nicht nur die Funktion der Bereitstellung einer Ausrichtung, sondern stellt auch die Drehhemmung bereit. Hierdurch wird eine relative Rotation zwischen dem Anschlussstück und dem Klemmring und/oder dem Lagerungsabschnitt um die Mittelachse einschränkbar.

Vorzugsweise ist das Positionierungselement zwischen Anschlussstück und Spannhülse angeordnet, wobei der Klemmring bezüglich einer Rotation um die Mittelachse an der Spannhülse festgelegt ist. Hierdurch können Klemmring und Spannhülse gemeinsam zum Anschlussstück ausgerichtet und festgelegt werden.

Besonders bevorzugt ist das Positionierungselement Teil des Anschlussstückes und Teil der Spannhülse, wobei die Teile am Anschlussstück mit den Teilen an der Spannhülse zusammenarbeiten. Die jeweiligen Teile des Positionierungselements sind vorzugsweise integral an der Spannhülse bzw. am Anschlussstück angeformt, so dass jeweils eine einstückige Struktur bereitstellbar ist.

Vorzugsweise ist das Klemmohr derart angeordnet, dass es für ein Presswerkzeug lateral zugänglich ist. Der Installateur kann also ein Presswerkzeug lateral zur Mittelachse ansetzen.

Vorzugsweise umfasst das Anschlussstück mindestens zwei Anschlussstutzen, welche in jeweils ein Rohr einsteckbar sind. Pro Anschlussstutzen ist je ein Klemmring und je eine Spannhülse sowie je ein Positionierungselement angeordnet, welche Positionierungselemente derart angeordnet sind, dass die Spannhülsen bezüglich der Mittelachse jeweils die gleiche Orientierung einnehmen können. Somit können alle Spannhülsen bzw. Klemmringe in gleicher Lage zueinander ausgerichtet werden.

In einer ersten Ausführungsform umfasst das Positionierungselement je eine Rasterhebung und je eine Rastausnehmung. Rasterhebung und Rastausnehmung arbeiten miteinander zusammen, wobei die Rasterhebung in die Rastausnehmung eingreift. Vorzugsweise ist die Rasterhebung am Anschlussstück und die Rastausnehmung an der Spannhülse angeordnet, insbesondere integral angeformt. Alternativ ist die Rasterhebung an der Spannhülse und die Rastausnehmung am Anschlussstück angeordnet, insbesondere integral angeformt.

Besonders bevorzugt sind mehrere Positionierungselemente mit je einer Rasterhebung und je einer Rastausnehmung in gleichem Winkelabstand zueinander um die Mittelachse herum verteilt angeordnet. Hierdurch wird eine gleichmässige Rasterung bereitgestellt und der Installateur kann im Rahmen der Teilung der Rasterung die Spannhülse und den Klemmring relativ zum Anschlussstück ausrichten.

Vorzugsweise beträgt der Winkelabstand zwischen zwei benachbarten Positionierungselementen zwischen 20° und 60°. Besonders bevorzugt wird eine 45°-Teilung.

Die Rastausnehmungen weisen bevorzugt Rastflanken auf, über welche die Rasterhebung bewegt werden können bzw. welche den Anschlag bereitstellen. Die Rastflanken erstrecken sich dabei so, dass diese im Wesentlichen in Richtung der Mittelachse liegen und somit einen Anschlag für die Rasterhebung bereitstellen.

In einer besonders bevorzugten Variante schliesst sich einer ersten Rastausnehmung ein erster Freischnitt an, welcher sich tangential zur Mittelachse vom tiefsten Punkt der Rastausnehmung weg erstreckt, und einer zweiten Rastausnehmung, die der besagten ersten Rastausnehmung bezüglich der Mittelachse gegenüberliegt, schliesst sich ebenfalls ein Freischnitt an, welcher sich tangential zur Mittelachse vom tiefsten Punkt der Rastausnehmung weg erstreckt. Die Freischnitte liegen somit bezüglich der Mittelachse einander gegenüber.

Die Freischnitte haben den Vorteil, dass diese die Entformung des Anschlussstückes, wenn dieses als Spritzgiessteil gefertigt wird, begünstigen.

Besonders bevorzugt erstrecken sich die beiden Freischnitte in die gleiche Richtung weg und verlaufen im Wesentlichen parallel zueinander. Zwei Rasterhebungen sind dann bezüglich der Mittelachse diametral gegenüber einander angeordnet. Hierdurch wird die Funktionalität der Rastelemente trotz den guten Entformungsmöglichkeiten nicht beeinträchtigt.

In einer weiteren Ausführungsform wird das Positionierungselement durch eine die Reibung zwischen dem Anschlussstück und der Spannhülse erhöhende Struktur bereitgestellt, wobei der Klemmring bezüglich einer Rotation um die Mittelachse an der Spannhülse festgelegt ist. Bei einer Kraft, welche die Reibungskraft zwischen der Spannhülse und dem Anschlussstück überwindet, kann die Spannhülse mit dem Klemmring relativ zum Anschlussstück verschoben werden.

In einer weiteren Ausführungsform wird das Positionierungselement durch eine Klemmkraft zwischen dem Anschlussstück und der Spannhülse bereitgestellt.

Vorzugsweise steht die Spannhülse in allen Ausführungsformen über eine Einhängeverbindung mit dem Anschlussstück in Verbindung. Die Spannhülse kann also am Anschlussstück eingehängt werden und hierdurch werden Spannhülse und Anschlussstück miteinander verbunden.

Vorzugsweise weist für die Einhängeverbindung der Lagerungsabschnitt mindestens ein Einhängeabschnitt auf und das Anschlussstück weist mindestens eine Ausnehmung auf, in welche der mindestens eine Einhängeabschnitt eingreift. Die Ausnehmung dient der Aufnahme des Einhängeabschnitts. Ausnehmung und Einhängeabschnitt sind vorzugsweise derart ausgebildet, dass eine Relativbewegung um die Mittelachse zwischen dem Anschlussstück und dem Spannelement ermöglicht wird.

Besonders bevorzugt ist der Lagerungsabschnitt mit dem mindestens einen Einhängeabschnitt durch den mindestens einen Schlitz entlang der Mittelachse gesehen unterbrochen. Durch den Schlitz wird die Montage des Spannrings zum Anschlussstück vereinfacht.

Vorzugsweise wird die Ausnehmung, in welche der Einhängeabschnitt einragen kann, durch einen um die Mittelachse umlaufenden und sich vom Anschlussstück wegstehenden Steg und einen vom Steg beabstandet liegenden Flansch begrenzt. Flansch und Steg ragen von der Aussenseite des Anschlussstückes weg. In der Tiefe zur Mittelachse hin wird die Ausnehmung durch die Aussenseite des Spannelementes begrenzt.

Weist das Anschlussstück mehrere Anschlussstutzen auf, so bilden vorzugsweise die besagten Flansche jeweils die Trennung zwischen den Anschlussstutzen. Pro Anschlussstutzen sind je ein Flansch und je ein Steg angeordnet.

In einer Variante sind die Positionierungselemente, insbesondere die Rastausnehmung und die Rasterhebungen, zwischen dem Steg und der Innenseite der Spannhülse angeordnet. Insbesondere erstrecken sich die Rastausnehmungen radial in den Steg hinein und die Rasterhebungen sind benachbart zum Einhängeabschnitt angeordnet und erstrecken sich radial von der Innenseite der Spannhülse weg. Eine umgekehrte Anordnung ist auch denkbar, wobei die Rastausnehmungen dann sich in die Spannhülse hineinerstrecken und die Rasterhebungen sich vom Steg weg erstrecken.

In einer anderen Variante sind die Positionierungselemente, insbesondere die Rastausnehmung und die Rasterhebungen, zwischen dem Flansch und der Stirnseite der Spannhülse angeordnet. Vorzugsweise erstrecken sich die Rasterhebungen vom Flansch weg und dass die Rastausnehmungen sind stirnseitig am Einhängeabschnitt angeordnet und erstrecken sich in den Einhängeabschnitt hinein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Rohrklemme gemäss einer ersten Variante einer ersten Ausführungsform im zusammengebauten Zustand vor einer Verpressung;
- Fig. 2: eine perspektivische Ansicht der Rohrklemme nach Figur 1 in demontiertem Zustand;
- Fig. 3: eine teilweise geschnittene Ansicht der Rohrklemme nach Figur 1;
- Fig. 4a-c: Ansichten von Teilen der Rohrklemme und der Rohrklemme nach Figur 1 in Richtung der Mittelachse;
- Fig. 5: eine perspektivische Ansicht einer Rohrklemme gemäss einer zweiten Varianten der ersten Ausführungsform im zusammengebauten Zustand vor einer Verpressung;
- Fig. 6: eine perspektivische Ansicht der Rohrklemme nach Figur 5 in demontiertem Zustand;
- Fig. 7: eine teilweise geschnittene Ansicht der Rohrklemme nach Figur 5;
- Fig. 8a-c: Ansichten von Teilen der Rohrklemme und der Rohrklemme nach Figur 5 in Richtung der Mittelachse;
- Fig. 9: eine Rohrklemme mit einem Anschlussstück mit zwei Anschlussstutzen; und
- Fig. 10: eine Rohrklemme mit einem Anschlussstück mit drei Anschlussstutzen.

### BESCHREIBUNG BEVORZUGTER AUSFÜHRUNGSFORMEN

In den Figuren wird eine Rohrklemme 1 zum Verbinden eines Rohrs gezeigt. Das Rohr selbst wird nicht gezeigt. Die Rohrklemme 1 umfasst ein in ein Ende des Rohrs einsteckbares Anschlussstück 2 mit einer Mittelachse M, einen Klemmring 3, der entlang seines Umfangs einen ringförmigen Abschnitt 4 und ein sich radial nach aussen erstreckendes Ohr 5 aufweist, das von einem Werkzeug zusammenpressbar ist, und eine durch den Klemmring 3 zusammenpressbare Spannhülse 6. Die Rohrklemme 1 wird also durch die Teile Anschlussstück 2, Klemmring 2 und Spannhülse 6 bereitgestellt. Bei einer Einwirkung durch das Werkzeug auf das Ohr 5 verkleinert sich der Durchmesser des Klemmrings 3, wodurch eine Radialkraft auf die Spannhülse 6 und somit auf das zwischen der Spannhülse 6 und dem Anschlussstück 2 liegende Rohr einwirken kann.

Das Anschlussstück 2, welches mit dem Rohr 2 verbunden werden soll, ist im Wesentlichen zylindrisch ausgebildet und erstreckt sich entlang einer Mittelachse M. Das Anschlussstück 2 begrenzt mit einer umlaufenden Seitenwand 22 einen Hohlraum 23. Im verbunden Zustand mündet der Rohrinnenraum in den Hohlraum 23. Das Anschlussstück 2 weist weiterhin einen Flansch 18 auf, welcher sich von der Seitenwand 22 bezüglich des Hohlraums 23 nach aussen erstreckt. Beabstandet zum Flansch 18 ist ein umlaufender Steg 17 angeordnet. Zwischen Steg 17 und Flansch 18 liegt eine umlaufende Ausnehmung oder Rille 16. Die umlaufende Ausnehmung 16 wird hier vom Flansch 18 und vom Steg 17 begrenzt. Weiter umfasst das Anschlussstück 2 einen Anschlussstutzen 24, mit welchem das Anschlussstück 2 in den Rohrinnenraum einragt. In diesem Anschlussstutzen 24 wird durch die Rohrklemme 1 eine entsprechende Kraft vom Rohr auf das Anschlussstück 2 übertragen. Der Anschlussstutzen 24 ist im Wesentlichen zylindrisch ausgebildet und kann optional eine Funktionsstruktur 25 umfassen. In der vorliegenden Ausführungsform weist die Funktionsstruktur 25 verschiedene Rillen auf, welche die Dichtigkeit zwischen dem Anschlussstück 2 und dem Rohr verbessert. Die Funktionsstruktur 25 kann alternativ oder zusätzlich als Rückhaltestruktur ausgebildet sein.

Das Anschlussstück 2 ragt mit dem Anschlussstutzen 24 in den Rohrinnenraum ein und erstreckt sich soweit in den Rohrinnenraum, dass der Anschlussstutzen 24 in den Wirkungsbereich des Klemmrings 3 zu liegen kommt. Der Klemmring 3 kann dann gemäss der untenstehenden Beschreibung verpresst werden und bringt dabei eine Klemmkraft auf das Rohr und das Anschlussstück 2 auf, sodass das Rohr zum Anschlussstück 2 geklemmt wird. Der maximale Aussendurchmesser des Anschlussstutzens 24 ist etwas kleiner oder gleich dem Innendurchmessers des Rohrs gewählt.

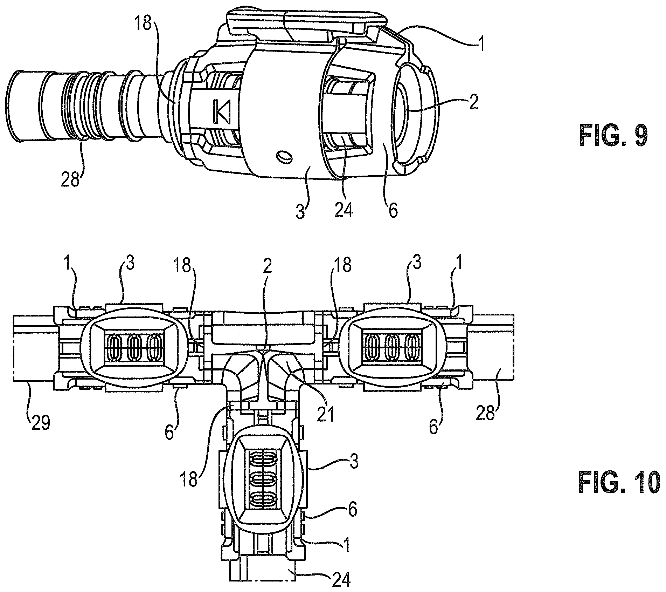

Dem Flansch 18 kann sich mindestens ein weiterer Anschlussstutzen 28, welcher dann ebenfalls mit Klemmring 3 und Spannhülse 6 versehen ist. Der weitere Anschlussstutzen wird in der Figur 9 gezeigt. Wird ein weiterer Anschlussstutzen vorgesehen, so kann die Rohrklemme zur Verbindung von zwei kollinear verlaufenden Rohren eingesetzt werden. Werden zwei weitere Anschlussstutzen vorgesehen, so kann ein T-Stück bereitgestellt werden, wie dies in der Figur 10 gezeigt wird.

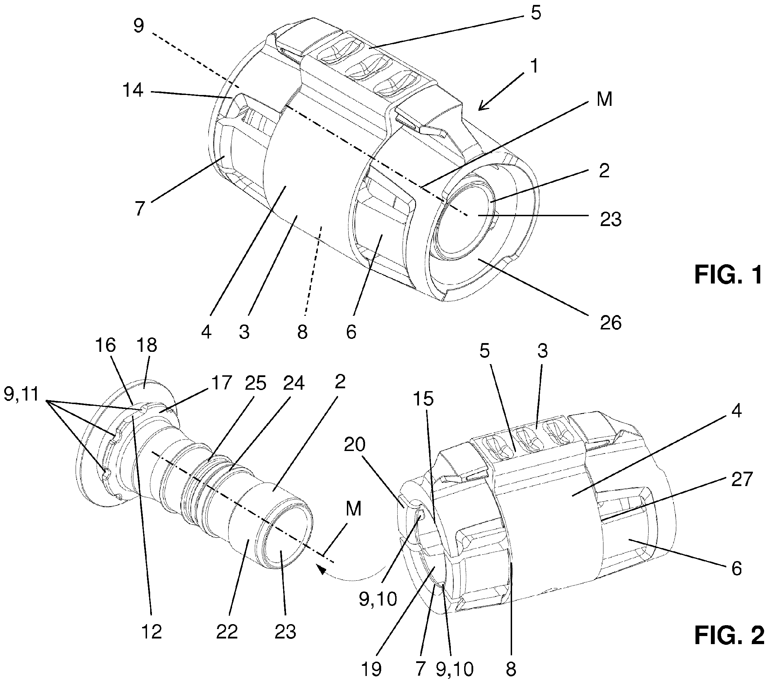

Der Klemmring 3, welcher in der Figur 1 gut erkannt werden kann, weist einen sich entlang seines Umfangs erstreckenden ringförmigen Abschnitt 4 und ein sich von diesem Abschnitt 4 radial nach aussen erstreckendes Ohr 5 auf. Das Ohr 5 ist mit einem Werkzeug zusammenpressbar, wobei sich der Durchmesser des ringförmigen Abschnittes 4 verringert, sodass eine Klemmkraft in radialer Richtung zur Mittelachse M auf das Rohr im Anschlussstutzen 24 bereitgestellt werden kann.

Die Spannhülse 6, welche in den Figuren 1 und 2 perspektivisch dargestellt ist, ragt mit einem Spannabschnitt 8 mindestens teilweise in den ringförmigen Abschnitt 4 des Klemmrings 3 ein. Der Spannabschnitt 8 ist im Wesentlichen zylindrisch ausgebildet und weist entlang der Mittelachse M gesehen eine im Wesentlichen gleiche Ausdehnung auf, wie der ringförmige Abschnitt 4. Mit anderen Worten gesagt ragt der Spannabschnitt 8 im Wesentlichen vollständig in den ringförmigen Abschnitt 4 ein. Alternativ kann der Spannabschnitt 8 aber auch so ausgebildet sein, dass dieser durch den ringförmigen Abschnitt 4 hindurch ragt, sodass der Spannabschnitt 8 bezüglich des ringförmigen Abschnittes 4 und der Mittelachse sich auf beiden Seiten aus dem ringförmigen Abschnitt 4 heraus erstreckt.

Die Spannhülse 6 weist weiter einen Lagerungsabschnitt 7 auf, welcher sich dem Spannabschnitt 8 anschliesst. Der Lagerungsabschnitt 7 steht dabei einstückig mit dem Spannabschnitt 8 in Verbindung. Lagerungsabschnitt 7 und Spannabschnitt 8 definieren einen zylindrischen Innenraum 26, welcher das Rohr aufnehmen kann. Der Spannabschnitt 8 liegt zwischen dem ringförmigen Abschnitt 4 des Klemmrings 3 und dem Rohr. Der Spannabschnitt 8 beziehungsweise die Spannhülse 6 ist mit dem Innenraum 26 so ausgebildet, dass das Rohr im Wesentlichen vollständig umgeben wird. Mit dem Lagerungsabschnitt 7 steht die Spannhülse 6 mit dem Anschlussstück 2 in Kontakt.

Zwischen dem Anschlussstück 2 und dem Spannabschnitt 8 wird ein ringförmiger Zwischenraum 26 geschaffen, in welchen das Rohr einragen kann.

Der Spannabschnitt 8 verfügt über mindestens einen Schlitz 27, welcher die Wandung des Spannabschnittes 9 von aussen zum Innenraum 26 hin durchbricht. In der vorliegenden Ausführungsform sind vier Schlitze 27 angeordnet. Wenn nur der Klemmring 3 über das Ohr 5 zusammengepresst wird, wird eine Kraft von der Spannhülse 6 auf den Spannabschnitt 8 der Spannhülse 6 übertragen. Dabei wird der Spannabschnitt 8 entsprechend gegen das Rohr gedrückt, wobei die lichte Weite des Schlitzes 27 während des Vorgangs des Verpressens mit zunehmender Kraft bzw. Verformung des Ohrs 5 verkleinert wird. Die lichte Weite des Schlitzes 27 ist dabei so gewählt, dass diese im zusammengepressten Zustand annähernd oder ganz aufgehoben wird. Das heisst, dass die lichte Weite des Schlitzes 27 bei Erreichen einer vorbestimmten Verpresskraft annähernd oder ganz aufgehoben wird. Folglich werden die beiden Seiten des Spannabschnittes im Bereich der Schlitze 27 auf Block gefahren und der Schlitz 27 wird im zusammengepressten Zustand nahezu, insbesondere vollständig, aufgehoben. Dies hat den Vorteil, dass der Spannabschnitt 8 das Rohr um dessen Umfang im Bereich der Klemmung vollständig umgibt, wodurch eine unerwünschte Verformung des Rohres vermieden wird. Zudem kann, falls das Rohr mit einer Kunststoffbeschichtung versehen ist, ein Fliessen des Kunststoffes in allfällige Lücken der Rohrklemme 1, insbesondere in den Bereich des Ohrs 5, vermieden werden.

Weiter umfasst die Rohrklemme 1 mindestens ein Positionierungselement 9. Das Positionierungselement 9 ist derart angeordnet, dass die Rotationsposition zwischen Anschlussstück 2 und der Spannhülse 6 sowie dem Klemmring 3 bezüglich einer Rotation um die Mittelachse M ausrichtbar und festlegbar ist.

Unter "ausrichtbar" wird verstanden, dass die Position zwischen Anschlussstück 2 und Spannhülse 6 bzw. Klemmring 3 nach den Bedürfnissen des Installateurs anhand der lokalen Gegebenheiten ausgerichtet werden kann. Es findet beim Ausrichten eine Rotation der Spannhülse 6 und dem Klemmring 3 zum feststehenden Anschlussstück 2 statt. Das Anschlussstück 2 ragt bei der Ausrichtung schon in das Rohr hinein und liegt dort aufgrund der Reibung zwischen Rohr und der Innenseite 19 der Spannhülse 6 fest.

Unter "festlegbar" wird verstanden, dass vor und nach erfolgter Ausrichtung die Position von Spannhülse 6 sowie Klemmring 3 relativ zum Anschlussstück 2 im Wesentlichen festgelegt ist. Das heisst, dass sich die Position nicht von alleine, also ohne Einwirkung einer äusseren Kraft, verändert. Mit anderen Worten gesagt, schränkt das mindestens eine Positionierungselement 9 die relative Rotation zwischen dem Anschlussstück 2 und der Spannhülse 6 sowie ggf. dem Klemmring 3 ein. Es wird also eine gegen die relative Rotation wirkende Drehhemmung bereitgestellt. Für die Ausrichtung muss eine Ausrichtungskraft bereitgestellt werden, welche grösser ist als die Widerstandskraft, die durch die Drehhemmung zwischen Anschlusstück 2 und Spannhülse 6 bereitgestellt wird.

In den gezeigten Ausführungsformen ist das Positionierungselement 9 jeweils zwischen Anschlussstück 2 und Spannhülse 6 angeordnet. Teile des Positionierungselementes 9 sind am Anschlussstück 2 und andere Teile an der Spannhülse 6 angeordnet. Der Klemmring 3 ist bezüglich einer Rotation um die Mittelachse M an der Spannhülse 6 festgelegt. Eine relative Rotation zwischen Klemmring 3 und Spannhülse 6 um die Mittelachse M herum ist somit nicht vorgesehen.

Das Klemmohr 5 ist derart angeordnet, dass es für ein Presswerkzeug lateral zugänglich ist. Das heisst, der Installateur kann bei Überwindung der Drehhemmung, welche das Positionierungselement 9 bereitstellt, die Position zwischen dem Anschlussstück 2 und der Spannhülse und dem Klemmring 3 um die Mittelachse M einstellen. Nach erfolgter Ausrichtung kann der Installateur mit dem Presswerkzeug das Ohr 5 lateral zur Mittelachse M angreifen und verpressen, so dass der Durchmesser des Spannabschnittes 8 verkleinert wird und letzterer auf das Rohr einwirkt.

In den gezeigten Figuren umfasst das Positionierungselement 9 je eine Rasterhebung 10 und eine Rastausnehmung 11. Die Rasterhebung 10 ragt dabei in die Rastausnehmung 11 ein und somit wird eine Rastverbindung bereitgestellt. Das mindestens eine Positionierungselement 9 hat also bevorzugterweise die Gestalt einer Rastverbindung. Es sind bevorzugt mehrere Rastverbindungen, sprich mehrere Paarungen Rasterhebung 10 und Rastausnehmung 11, bereitgestellt. Mit der Rastverbindung wird die entsprechende Drehhemmung bereitgestellt, gleichwohl aber kann bei mehreren Paarungen eine Rasterung für eine definierte Ausrichtung bereitgestellt werden.

Die Form der Rasterhebung 10 und der Rastausnehmung 11 kann beliebig sein. Wichtig ist, dass die Rasterhebung 10 in die Rastausnehmung 11 einragen kann, so dass die besagte Widerstandskraft bereitgestellt wird. Über die geometrische Form von Rasterhebung 10 und Rastausnehmung 11 sowie über den Grad des Überschnittes, welcher definiert wie weit die Rasterhebung 10 in die Rastausnehmung 11 einragt, kann die besagte Widerstandskraft definiert werden.

Die Zahl der Rasterhebungen 10 entspricht vorzugsweise der Zahl der Rastausnehmungen 11. Es ist aber auch denkbar, dass die Zahl der Rasterhebungen 10 kleiner ist, als die Zahl der Rastausnehmungen 11.

In der in der Figur 2 gezeigten Ausführungsform ist die Rasterhebung 10 an der Spannhülse 6 angeordnet und die Rastausnehmung 11 ist am Anschlussstück 2 angeordnet. Eine umgekehrte Anordnung ist auch denkbar.

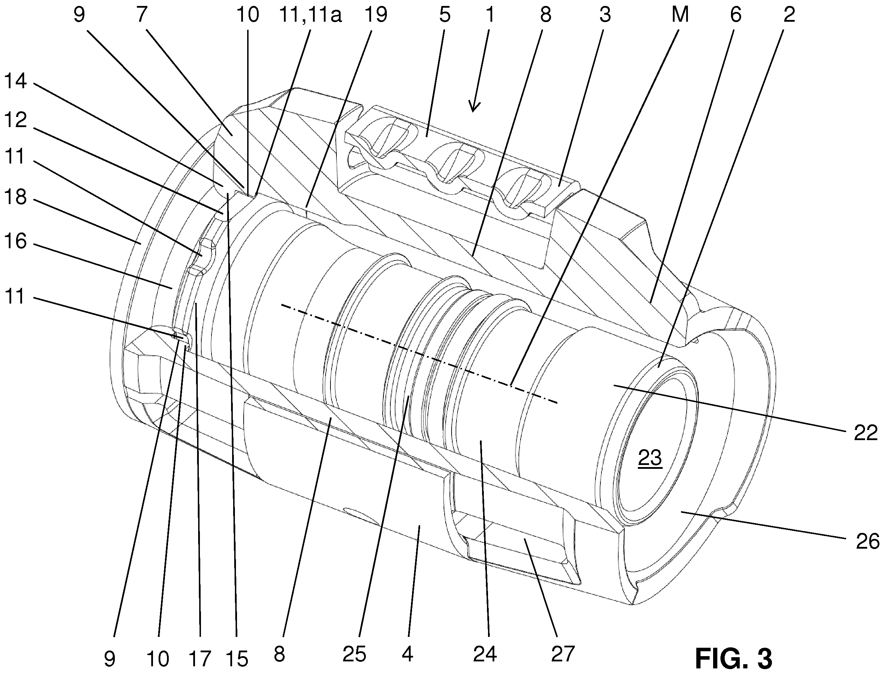

In der Figur 3 kann gut erkannt werden, wie die Rastausnehmung 11 sich in das Anschlussstück 2 hinein erstreckt und wie die Rasterhebung 10 in die Rastausnehmung 11 hineinragt. Bei Einwirkung der besagten Ausrichtungskraft wird die Widerstandskraft bzw. die Drehhemmung zwischen Rasterhebung 10 und Rastausnehmung 11 überwunden und es kommt zu einer Rotation von Klemmring 3 und Spannhülse 6 relativ zum Anschlussstück 2. Bei der Rotation wird also die Rastverbindung aufgehoben und die Rasterhebungen 10 kommen auf die Bereiche zwischen zwei benachbarten Rastausnehmungen 11 zu liegen. Somit kann der Klemmring 3 und die Spannhülse 6 um ein Rastelement relativ zum Anschlussstück 2 verschwenkt werden.

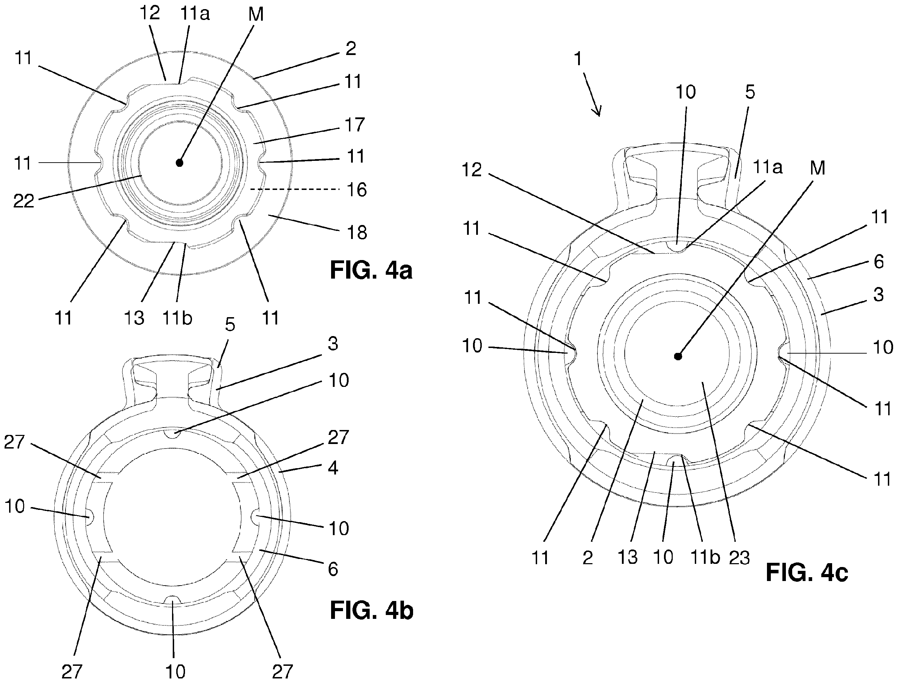

Die Figur 4a zeigt eine Ansicht des Anschlussstückes 2 in Richtung der Mittelachse M gesehen, wobei die einzelnen Rastausnehmungen 11 gut erkennbar sind. Die Figur 4b zeigt eine Ansicht der Spannhülse 6 mit dem Klemmring 3 in Richtung der Mittelachse M gesehen, wobei die einzelnen Rasterhebungen 10 gut erkennbar sind. Die Figur 4c zeigt sodann die Zusammensetzung von Anschlussstücke 2 und Spannhülse 6 mit dem Klemmring 3. Die Positionierungselemente 9, hier also die Rasterhebungen 10 und die Rastausnehmungen 11, sind jeweils im gleichen Winkelabstand zueinander um die Mittelachse M herum verteilt angeordnet. In der gezeigten Ausführungsform liegt zwischen zwei benachbarten Positionierungselementen 9 ein Winkelabstand von 45°. Folglich kann die Spannhülse 6 und der Klemmring 3 um jeweils 45°-Rasten zum Anschlussstück 2 verschwenkt werden.

Von der Figur 4a und der Figur 4c kann gut erkannt werden, dass eine erste Rastausnehmung 11a einen ersten Freischnitt 12 umfasst. Der erste Freischnitt 12 schliesst sich dabei der ersten Rastausnehmung 11a an. Der Freischnitt 12 erstreckt sich tangential zur Mittelachse M vom tiefsten Punkt der Rastausnehmung 11a von der Rastausnehmung 11a weg. Einer weiteren Rastausnehmung 11b, die bezüglich der Mittelachse M gegenüber der ersten Rastausnehmung 11a liegt, ist ebenfalls ein Freischnitt angeordnet, welcher das Bezugszeichen 13 trägt. Der Freischnitt 13 erstreckt sich ebenfalls tangential zur Mittelachse M vom tiefsten Punkt der Rastausnehmung 11b weg. Durch die Freischnitte 12, 13 kann die Herstellung des Anschlussstückes durch ein Spritzgiessverfahren vereinfacht werden. Von der Figur 4c kann gut erkannt werden, dass trotz der Anordnung der Freischnitte die Funktionalität nicht beeinträchtigt wird. Liegt eine Rasterhebung 10 in der Ausnehmung 11a und eine Rasterhebung 10 in der Ausnehmung 11b, so ist die Rotation um die Mittelachse M trotz der Freischnitte 12, 13 nicht möglich.

Die Spannhülse 6 steht über eine Einhängeverbindung 14 mit dem Anschlussstück 2 in Verbindung. Die Einhängeverbindung 14 kann in der Figur 3 gut erkannt werden. Für die Einhängeverbindung 14 umfasst der Lagerungsabschnitt 7 der Spannhülse 6 mindestens ein Einhängeabschnitt 14, welche sich radial vom Lagerungsabschnitt 7 zur Mittelachse M hin erstreck. Das Anschlussstück 2 umfasst, wie oben dargelegt, mindestens eine Ausnehmung 16, in welche der mindestens eine Einhängeabschnitt 15 eingreift. In der gezeigten Ausführungsform erstrecken sich der Einhängeabschnitt 15 und die Ausnehmung 16 vollständig um die Mittelachse M herum.

Von den Figuren 3 und 4a bis 4c kann gut erkannt werden, dass die Rastausnehmungen 11 hier im Bereich des Steges 17 angeordnet sind. Die Rasterhebungen 10 liegen zwischen dem Steg 17 und der Innenseite 19 der Spannhülse 6. Die Rasterhebungen 10 schliessen sich dabei unmittelbar an den Einhängeabschnitt 15 an.

Diese Anordnung hat den Vorteil, dass eine ausserordentlich kompakte Struktur bereitgestellt werden kann.

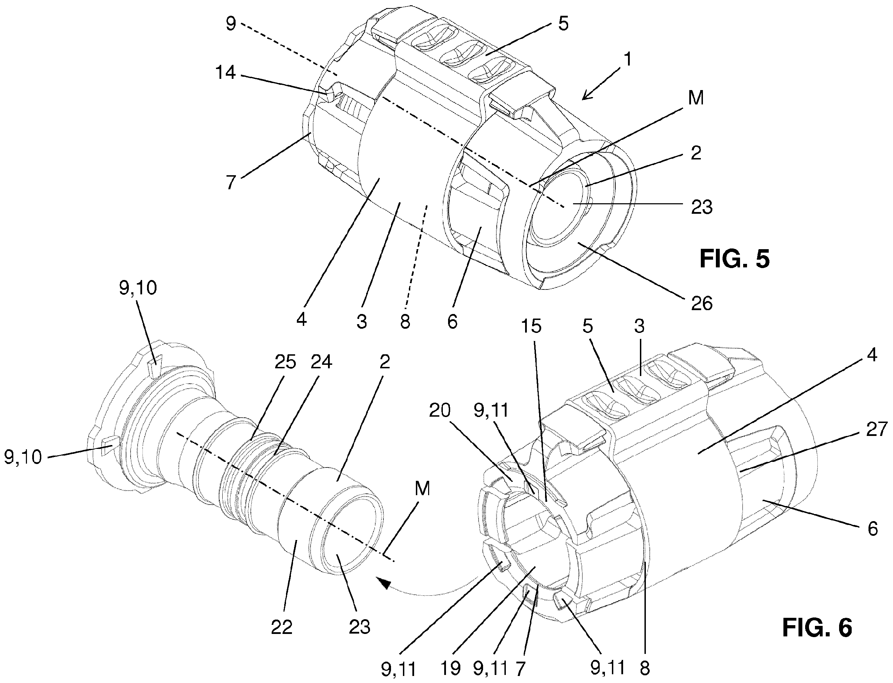

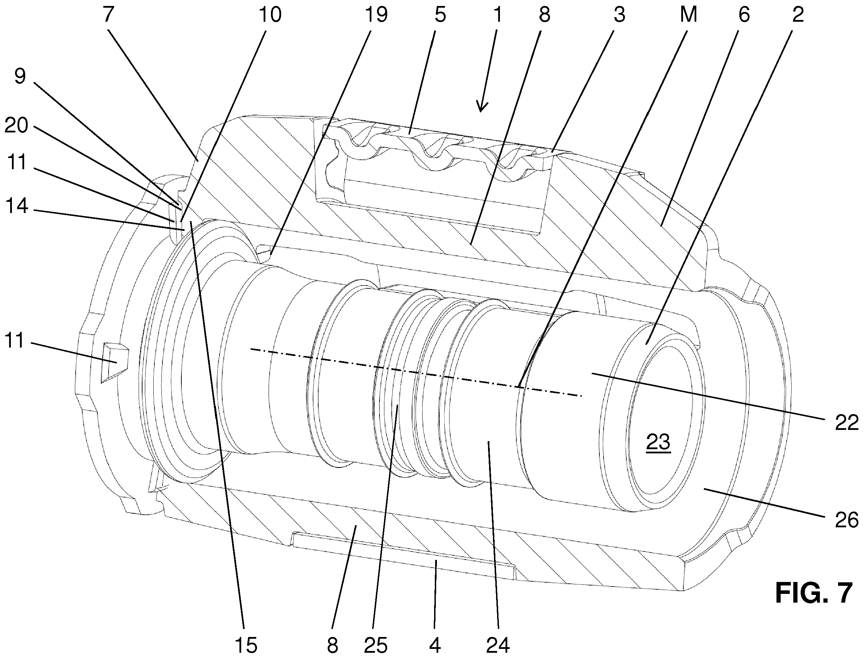

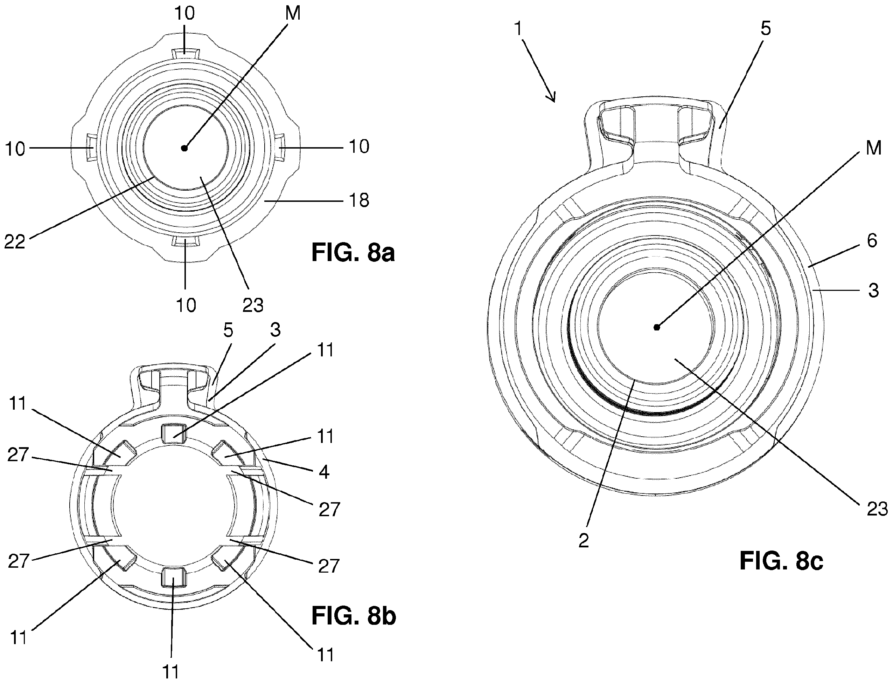

Die Figuren 5 bis 8c zeigen eine weitere Variante der Rohrklemme 1. Gleiche Teile sind mit gleichen Bezugszeichen versehen und es wird auf die obige Beschreibung verwiesen. Die Rohrklemme 1 gemäss den Figuren 5 bis 8c unterscheidet sich im Wesentlichen bezüglich der Anordnung der Positionierungselemente 9 von der Rohrklemme 1 gemäss den Figur 1 bis 4c. Die Positionierungselemente 9 umfassen in der in den Figuren 5 bis 8c gezeigten Ausführungsform ebenfalls Rasterhebungen 10 und Rastausnehmungen 11. Die Rasterhebungen 10 erstrecken sich hier vom Flansch 18 in die Ausnehmung 16, die zwischen dem Flansch 18 und dem Steg 17 liegt, hinein. Die Rastausnehmungen 11 erstrecken sich von der Stirnseite 20 der Spannhülse 6 in die Spannhülse 6 hinein. Die Stirnseite 20 ist hier Teil des Einhängeabschnittes 15, welcher in die Ausnehmung 16 einragt. Die Stirnseite 20 kommt dabei in Kontakt mit dem Flansch 18 und die Rastausnehmungen 11, welche sich in die Stirnseite 20 hinein erstrecken nehmen dabei die Rasterhebungen 10 auf.

Von der Figur 6 kann gut erkannt werden, dass hier der Winkelabstand zwischen zwei benachbarten Positionierungselementen 9, also zwei benachbarten Rasterhebungen 10 bzw. Rastausnehmungen 11, 90° beträgt. Es wird also eine 90°-Teilung bereitgestellt.

Mit der Figur 9 wird gezeigt, dass sich dem Flansch 18 links und rechts je ein Anschlussstutzen 24, 28 anschliesst. Der Flansch 18 liegt dabei zwischen den beiden Anschlussstutzen 24, 28. In der Figur 10 wird ein T-Stück gezeigt, welches drei Anschlussstutzen 24, 28, 29 umfasst. Jedes der Lagerungsabschnitte 24, 28, 29 weist dabei einen Flansch 18 auf, welcher Teil eines Verbindungsstückes 21 ist. Pro Anschlussstutzen 24, 28 ist je ein Klemmring 3 und je eine Spannhülse 6 angeordnet. Weiter ist pro Anschlussstutzen 24, 28, 29 je ein Positionierungselement 9 vorhanden. Die Positionierungselemente 9 der unterschiedlichen Anschlussstutzen 24, 28, 29 sind vorzugsweise derart angeordnet, dass die Spannhülsen 6 und der Klemmring 3 jeweils die gleiche Lage einnehmen können. Folglich kann eine identische Ausrichtung der Spannhülsen 3 untereinander erreicht werden.

In einer anderen in den Figuren nicht gezeigten Ausführungsform wird das Positionierungselement 9 durch eine die Reibung zwischen dem Anschlussstück 2 und der Spannhülse 6 erhöhende Struktur bereitgestellt. Diese Struktur kann beispielsweise zwischen Steg 17 und Innenseite 19 angeordnet werden.

Das Anschlussstück und die Spannhülse sind vorzugsweise aus Kunststoff hergestellt. Der Klemmring ist vorzugsweise aus einem metallischen Werkstoff.

**BEZUGSZEICHENLISTE**

| | | | |
|---|---|---|---|
| 1 | Rohrklemme | 28 | weiterer Anschlussstutzen |
| 2 | Anschlussstück | 29 | weiterer Anschlussstutzen |
| 3 | Klemmring | M | Mittelachse |
| 4 | ringförmiger Abschnitt | | |
| 5 | Ohr | | |
| 6 | Spannhülse | | |
| 7 | Lagerungsabschnitt | | |
| 8 | Spannabschnitt | | |
| 9 | Positionierungselement | | |
| 10 | Rasterhebung | | |
| 11, 11a, 11b | Rastausnehmung | | |
| 12 | erster Freischnitt | | |
| 13 | zweiter Freischnitt | | |
| 14 | Einhängeverbindung | | |
| 15 | Einhängeabschnitt | | |
| 16 | Ausnehmung | | |
| 17 | Steg | | |
| 18 | Flansch | | |
| 19 | Innenseite | | |
| 20 | Stirnseite | | |
| 21 | Verbindungsstück | | |
| 22 | Seitenwand | | |
| 23 | Hohlraum | | |
| 24 | Anschlussstutzen | | |
| 25 | Funktionsstrultur | | |
| 26 | zylindrischer Innenraum | | |
| 27 | Schlitz | | |

## Patentansprüche

1. Rohrklemme (1) zum Verbinden eines Rohres umfassend
ein in ein Ende des Rohres einsteckbares Anschlussstück (2) mit einer Mittelachse (M),
einen Klemmring (3), der entlang seines Umfanges einen ringförmigen Abschnitt (4) und ein sich radial nach aussen erstreckendes Ohr (5) aufweist, das von einem Werkzeug zusammenpressbar ist, und
eine durch den Klemmring (3) zusammenpressbare Spannhülse (6),
wobei die Spannhülse (6) einen Lagerungsabschnitt (7) und einen sich dem Lagerungsabschnitt (7) anschliessenden Spannabschnitt (8) umfasst,
wobei der Lagerungsabschnitt (7) mit dem Anschlussstück (2) in Kontakt steht und der Spannabschnitt (8) mindestens teilweise in den ringförmigen Abschnitt (4) des Klemmrings (3) einragt, und dazu ausgelegt ist das Rohr im Wesentlichen vollständig zu umgeben, wobei
die Rohrklemme (1) weiter mindestens ein Positionierungselement (9) umfasst, welches derart angeordnet ist, dass vor dem Zusammenpressen des Ohrs (5) die Rotationsposition um die Mittelachse (M) zwischen dem Anschlussstück (2) und der Spannhülse (6) und/oder dem Klemmring (3) ausrichtbar ist, **dadurch gekennzeichnet, dass** mit dem Positionierungselement (9) eine Drehhemmung zwischen Anschlussstück (2) und der Spannhülse (6) und/oder dem Klemmring (3) bereitstellbar ist.

2. Rohrklemme (1) nach Anspruch 1, **dadurch gekennzeichnet, dass** das Positionierungselement (9) zwischen Anschlussstück (2) und Spannhülse (6) angeordnet ist, wobei der Klemmring (3) bezüglich einer Rotation um die Mittelachse (M) an der Spannhülse (6) festgelegt ist.

3. Rohrklemme (1) nach Anspruch 1 oder 2, **dadurch gekennzeichnet, dass** das Klemmohr (5) derart angeordnet ist, dass es für ein Presswerkzeug lateral zugänglich ist.

4. Rohrklemme (1) nach einem der vorhergehenden Ansprüche, **dadurch gekennzeichnet, dass** das Anschlussstück (2) mindestens zwei Anschlussstutzen (24, 28, 29) umfasst, welche in jeweils ein Rohr einsteckbar sind, wobei pro Anschlussstutzen (24, 28, 29) je ein Klemmring (3) und je eine Spannhülse (6) sowie je ein Positionierungselement (9) angeordnet ist, welche Positionierungselemente (9) derart angeordnet sind, dass die Spannhülsen (6) bezüglich der Mittelachse (M) jeweils die gleiche Orientierung einnehmen können.

5. Rohrklemme (1) nach einem der vorhergehenden Ansprüche, **dadurch gekennzeichnet, dass** das Positionierungselement (9) je eine Rasterhebung (10) und eine Rastausnehmung (11) umfasst, wobei die Rasterhebung (10) am Anschlussstück (2) und die Rastausnehmung (11) an der Spannhülse (6) angeordnet sind, oder wobei die Rasterhebung (10) an der Spannhülse (6) und die Rastausnehmung (11) am Anschlussstück (2) angeordnet sind.

6. Rohrklemme (1) nach Anspruch 5, **dadurch gekennzeichnet, dass** mehrere Positionierungselemente (9) in gleichem Winkelabstand zueinander um die Mittelachse (M) herum angeordnet sind.

7. Rohrklemme (1) nach einem der Ansprüche 5 bis 6, **dadurch gekennzeichnet, dass** sich einer ersten Rastausnehmung (11a) ein erster Freischnitt (12) anschliesst, welcher sich tangential zur Mittelachse (M) vom tiefsten Punkt der Rastausnehmung (11a) weg erstreckt, und dass sich einer der besagten ersten Rastausnehmung (11a) bezüglich der Mittelachse (M) gegenüberliegen Rastausnehmung (11b) ebenfalls ein Freischnitt (13) anschliesst, welcher sich tangential zur Mittelachse (M) vom tiefsten Punkt der Rastausnehmung (11b) weg erstreckt.

8. Rohrklemme (1) nach Anspruch 7, **dadurch gekennzeichnet, dass** sich die beiden Freischnitte (12, 13) in die gleiche Richtung wegerstrecken und im Wesentlichen parallel zueinander verlaufen, und dass zwei Rasterhebungen (10) bezüglich der Mittelachse (M) diametral gegenüber einander angeordnet sind.

9. Rohrklemme (1) nach einem der Ansprüche 1 bis 3, **dadurch gekennzeichnet, dass** das Positionierungselement durch eine die Reibung zwischen dem Anschlussstück (2) und der Spannhülse (6) erhöhende Struktur bereitgestellt wird, oder, dass das Positionierungselement durch eine Klemmkraft zwischen dem Anschlussstück (2) und der Spannhülse (6) bereitgestellt wird.

10. Rohrklemme (1) nach einem der vorhergehenden Ansprüche, **dadurch gekennzeichnet, dass** die Spannhülse (6) über eine Einhängeverbindung (14) mit dem Anschlussstück (2) in Verbindung steht.

11. Rohrklemme (1) nach Anspruch 10, **dadurch gekennzeichnet, dass** für die Einhängeverbindung (14) der Lagerungsabschnitt (7) mindestens ein Einhängeabschnitt (15) aufweist und dass das Anschlussstück (2) mindestens eine Ausnehmung (16) aufweist, in welche der mindestens eine Einhängeabschnittt (15) eingreift.

12. Rohrklemme (1) nach Anspruch 11, **dadurch gekennzeichnet, dass** der Lagerungsabschnitt (7) mit dem mindestens einen Einhängeabschnitt (15) durch den mindestens einen Schlitz (27) entlang der Mittelachse (M) gesehen unterbrochen ist.

13. Rohrklemme (1) nach einem der Ansprüche 10 bis 12, **dadurch gekennzeichnet, dass** die Ausnehmung (16) durch einen um die Mittelachse (M) umlaufenden und sich vom Anschlussstück (2) wegstehenden Steg (17) und einen vom Steg (17) beabstandet liegenden Flansch (18) begrenzt ist.

14. Rohrklemme (1) nach Anspruch 13, **dadurch gekennzeichnet, dass** die Positionierungselemente (9), insbesondere die Rastausnehmung (11) und die Rasterhebungen (10) zwischen dem Steg (17) und der Innenseite (19) der Spannhülse (6) angeordnet sind.

15. Rohrklemme (1) nach Anspruch 13, **dadurch gekennzeichnet, dass** die Positionierungselemente (9), insbesondere die Rastausnehmung (11) und die Rasterhebungen (10) zwischen dem Flansch (18) und der Stirnseite (20) der Spannhülse (6) angeordnet sind.

## Claims

1. Pipe clamp (1) for connecting a pipe, comprising a connection piece (2), having a centre axis (M), which can be plugged into one end of the pipe,
a clamping ring (3) which has, along its circumference, an annular portion (4) and a radially outwardly extending lug (5) which can be compressed by a tool, and
a clamping sleeve (6) which can be compressed by the clamping ring (3),
wherein the clamping sleeve (6) comprises a bearing portion (7) and a clamping portion (8) adjoining the bearing portion (7),
wherein the bearing portion (7) is in contact with the connection piece (2), and the clamping portion (8) projects at least partially into the annular portion (4) of the clamping ring (3), and is designed to substantially completely surround the pipe,
wherein the pipe clamp (1) further comprises at least one positioning element (9) which is arranged in such a way that, before the lug (5) is compressed, the rotation position about the centre axis (M) between the connection piece (2) and the clamping sleeve (6) and/or the clamping ring (3) can be oriented, **characterized in that** the positioning element (9) makes it possible to provide an inhibition of rotation between connection piece (2) and the clamping sleeve (6) and/or the clamping ring (3).

2. Pipe clamp (1) according to Claim 1, **characterized in that** the positioning element (9) is arranged between connection piece (2) and clamping sleeve (6), wherein the clamping ring (3) is fixed with respect to a rotation about the centre axis (M) on the clamping sleeve (6).

3. Pipe clamp (1) according to Claim 1 or 2, **characterized in that** the clamping lug (5) is arranged in such a way that it is laterally accessible for a pressing tool.

4. Pipe clamp (1) according to one of the preceding claims, **characterized in that** the connection piece (2) comprises at least two connection stubs (24, 28, 29) which can be plugged into a pipe in each case, wherein a respective clamping ring (3) and a respective clamping sleeve (6) and a respective positioning element (9) are arranged for each connection stub (24, 28, 29), which positioning elements (9) are arranged in such a way that the clamping sleeves (6) can each assume the same orientation with respect to the centre axis (M).

5. Pipe clamp (1) according to one of the preceding claims, **characterized in that** the positioning element (9) comprises in each case one latching elevation (10) and one latching recess (11), wherein the latching elevation (10) is arranged on the connection piece (2), and the latching recess (11) is arranged on the clamping sleeve (6), or wherein the latching elevation (10) is arranged on the clamping sleeve (6), and the latching recess (11) is arranged on the connection piece (2).

6. Pipe clamp (1) according to Claim 5, **characterized in that** a plurality of positioning elements (9) are arranged around the centre axis (M) at the same angular distance from one another.

7. Pipe clamp (1) according to either of Claims 5 and 6, **characterized in that** a first latching recess (11a) is adjoined by a first clearance (12) which extends tangentially to the centre axis (M) away from the lowest point of the latching recess (11a), and **in that** a latching recess (11b), which is opposite to said first latching recess (11a) with respect to the centre axis (M), is likewise adjoined by a clearance (13) which extends tangentially to the centre axis (M) away from the lowest point of the latching recess (11b).

8. Pipe clamp (1) according to Claim 7, **characterized in that** the two clearances (12, 13) extend away in the same direction and extend substantially parallel to one another, and **in that** two latching elevations (10) are arranged diametrically opposite one another with respect to the centre axis (M).

9. Pipe clamp (1) according to one of Claims 1 to 3, **characterized in that** the positioning element is provided by a structure which increases the friction between the connection piece (2) and the clamping sleeve (6), or **in that** the positioning element is provided by a clamping force between the connection piece (2) and the clamping sleeve (6) .

10. Pipe clamp (1) according to one of the preceding claims, **characterized in that** the clamping sleeve (6) is connected to the connection piece (2) via a hook-in connection (14).

11. Pipe clamp (1) according to Claim 10, **characterized in that**, for the hook-in connection (14), the bearing portion (7) has at least one hook-in portion (15), and **in that** the connection piece (2) has at least one recess (16) in which the at least one hook-in portion (15) engages.

12. Pipe clamp (1) according to Claim 11, **characterized in that** the bearing portion (7) with the at least one hook-in portion (15) is interrupted by the at least one slot (27) as viewed along the centre axis (M).

13. Pipe clamp (1) according to one of Claims 10 to 12, **characterized in that** the recess (16) is delimited by a web (17), which runs around the centre axis (M) and projects away from the connection piece (2), and by a flange (18) situated at a distance from the web (17).

14. Pipe clamp (1) according to Claim 13, **characterized in that** the positioning elements (9), in particular the latching recess (11) and the latching elevations (10), are arranged between the web (17) and the inner side (19) of the clamping sleeve (6).

15. Pipe clamp (1) according to Claim 13, **characterized in that** the positioning elements (9), in particular the latching recess (11) and the latching elevations (10), are arranged between the flange (18) and the end side (20) of the clamping sleeve (6).

## Revendications

1. Collier de serrage (1), destiné à assembler un tuyau, comprenant
une pièce de raccord (2) insérable dans une extrémité du tuyau, pourvue d'un axe médian (M), une bague de serrage (3), qui le long de sa circonférence comporte un tronçon de forme annulaire (4) et une oreille (5) s'étendant vers l'extérieur en direction radiale, qui est susceptible d'être compressée à l'aide d'un outil et
une douille de serrage (6), susceptible d'être compressée par la bague de serrage (3),
la douille de serrage (6) comprenant un segment de logement (7) et un segment de serrage (8) se raccordant sur le segment de logement (7),
le segment de logement (7) étant en contact avec la pièce de raccord (2) et le segment de serrage (8) saillant au moins partiellement dans le tronçon de forme annulaire (4) de la bague de serrage (3) et étant conçu pour entourer le tuyau de manière sensiblement totale,
le collier de serrage (1) comprenant en outre au moins un élément de positionnement (9) qui est placé de telle sorte qu'avant la compression de l'oreille (5), la position de rotation autour de l'axe médian (M) entre la pièce de raccord (2) et la douille de serrage (6) et/ou la bague de serrage (3) soit orientable, **caractérisé en ce qu'**avec l'élément de positionnement (9), il est possible de mettre à disposition un blocage en rotation entre la pièce de raccord (2) et la douille de serrage (6) et/ou la bague de serrage (3) .

2. Collier de serrage (1) selon la revendication 1, **caractérisé en ce que** l'élément de positionnement (9) est placé entre la pièce de raccord (2) et la douille de serrage (6), la bague de serrage (3) étant immobilisée au niveau d'une rotation autour de l'axe médian (M) sur la douille de serrage (6).

3. Collier de serrage (1) selon la revendication 1 ou 2, **caractérisé en ce que** l'oreille de serrage (5) est placée de sorte à être accessible latéralement par un outil de compression.

4. Collier de serrage (1) selon l'une quelconque des revendications précédentes, **caractérisé en ce que** la pièce de raccord (2) comprend au moins deux tubulures de raccordement (24, 28, 29) qui sont insérables chacune dans un tuyau, pour chaque tubulure de raccordement (24, 28, 29) étant placés respectivement une bague de serrage (3) et respectivement une douille de serrage (6), ainsi que respectivement un élément de positionnement (9), lequel élément de positionnement (9) est placé de telle sorte que les douilles de serrage (6) puissent adopter chacune la même orientation par rapport à l'axe médian (M).

5. Collier de serrage (1) selon l'une quelconque des revendications précédentes, **caractérisé en ce que** l'élément de positionnement (9) comprend respectivement une élévation d'enclenchement (10) et un évidement d'enclenchement (11), l'élévation d'enclenchement (10) étant placée sur la pièce de raccord (2) et l'évidement d'enclenchement (11) étant placé sur la douille de serrage (6) ou l'élévation d'enclenchement (10) étant placée sur la douille de serrage (6) et l'évidement d'enclenchement (11) étant placé sur la pièce de raccord (2).

6. Collier de serrage (1) selon la revendication 5, **caractérisé en ce que** plusieurs éléments de positionnement (9) sont placés avec un même écart angulaire mutuel autour de l'axe médian (M).

7. Collier de serrage (1) selon l'une quelconque des revendications 5 à 6, **caractérisé en ce que** sur un premier évidement d'enclenchement (11a) se raccorde une première découpe libre (12), laquelle s'étend de manière tangentielle vers l'axe médian (M), en s'éloignant du point le plus bas de l'évidement d'enclenchement (11a) et **en ce que** sur l'évidement d'enclenchement (11b) opposé à l'un desdits premiers évidements d'enclenchement (11a) par rapport à l'axe médian (M) se raccorde également une découpe libre (13) qui s'étend de manière tangentielle vers l'axe médian (M) en s'éloignant du point le plus bas de l'évidement d'enclenchement (11b).

8. Collier de serrage (1) selon la revendication 7, **caractérisé en ce que** les deux découpes libres (12, 13) s'étendent en s'éloignant dans la même direction et sensiblement à la parallèle l'une de l'autre, et **en ce que** deux élévations d'enclenchement (10) sont placées diamétralement à l'opposé l'une de l'autre par rapport à l'axe médian (M).

9. Collier de serrage (1) selon l'une quelconque des revendications 1 à 3, **caractérisé en ce que** l'élément de positionnement est mis à disposition par une structure augmentant la friction entre la pièce de raccord (2) et la douille de serrage (6) ou **en ce que** l'élément de positionnement est mis à disposition par une force de serrage entre la pièce de raccord (2) et la douille de serrage (6).

10. Collier de serrage (1) selon l'une quelconque des revendications précédentes, **caractérisé en ce que** la douille de serrage (6) est en liaison avec la pièce de raccord (2) par l'intermédiaire d'une liaison par accrochage (14).

11. Collier de serrage (1) selon la revendication 10, **caractérisé en ce que** pour la liaison par accrochage (14), le segment de logement (7) comporte au moins un segment d'accrochage (15) et **en ce que** la pièce de raccord (2) comporte au moins un évidement (16) dans lequel s'engage l'au moins un segment d'accrochage (15).

12. Collier de serrage (1) selon la revendication 11, **caractérisé en ce que**, vu le long de l'axe médian (M), le segment de logement (7) avec l'au moins un segment d'accrochage (15) est interrompu par l'au moins une fente (27).

13. Collier de serrage (1) selon l'une quelconque des revendications 10 à 12, **caractérisé en ce que** l'évidement (16) est délimité par un listel (17) s'étendant circonférentiellement autour de l'axe médian (M) et faisant saillie depuis la pièce de raccord (2) et par une bride (18) située à distance du listel (17).

14. Collier de serrage (1) selon la revendication 13, **caractérisé en ce que** les éléments de positionnement (9), notamment l'évidement d'enclenchement (11) et les élévations d'enclenchement (10) sont placés entre le listel (17) et la face intérieure (19) de la douille de serrage (6).

15. Collier de serrage (1) selon la revendication 13, **caractérisé en ce que** les éléments de positionnement (9), notamment l'évidement d'enclenchement (11) et les élévations d'enclenchement (10) sont placés entre la bride (18) et la face frontale (20) de la douille de serrage (6).
